# EUROPEAN PATENT APPLICATION

(11) **EP 4 138 444 A1**
(43) Date of publication of application: **22.02.2023**
(21) Application number: 20931425.1
(22) Date of filing: 16.04.2020
(51) Int. Cl.: H04W 28/06

(54) **TERMINAL, BASE STATION, AND COMMUNICATION METHOD**

(71) Applicant: NTT DOCOMO, INC., Chiyoda-Ku Tokyo 100-6150 (JP)
(72) Inventor: HARADA, Kouhei, Tokyo 100-6150 (JP); HANAKI, Akihito, Tokyo 100-6150 (JP); TAKAHASHI, Hideaki, Tokyo 100-6150 (JP); MIN, Tianyang, Tokyo 100-6150 (JP)
(74) Representative: Hoffmann Eitle
(86) International application number: PCT/JP2020/016803
(87) International publication number: WO 2021/210147

(57) **Abstract**

A terminal includes a controller that determines, when a number of established contexts is M, a number of context identifiers associated with the established contexts is M, a number of contexts that are transmitted and not established is N, and a number of context identifiers associated with the contexts not established is N, whether a total number M+N is a maximum number of usable context identifiers; a transmitter that selects one established context when the total number is the maximum number, that associates a context identifier associated with the selected context with the new context by overwriting the selected context with the new context, and that transmits the new context and the associated context identifier; and a receiver that receives a feedback for the new context, wherein, when the feedback is positive, the controller applies a compressed header to a data transmission subsequent to the feedback.

## Description

### TECHNICAL FIELD

The present invention relates to a terminal, a base station, and a communication method in a radio communication system.

### BACKGROUND ART

In the Ethernet (Registered Trademark) header compression procedure, a compressor transmits, to a decompressor, a notification of a Full Header (FH) of a packet and a Context ID (CID) associated with the FH. The de-compressor transmits a notification of feedback on the context to the compressor. Upon receiving the feedback, the compressor determines that the context is established and starts compressing the header. Namely, the compressor transmits a compressed header (CH: Compressed Header) to the de-compressor.

Discussion of the design of the CID field (details of bit allocation) is ongoing at the 3GPP meeting. It is agreed to support the design of an extended CID field of 1 octet (= 8 bits) and the design of an extended CID field of 2 octets. It is also agreed that RRC signaling is used to indicate whether a CID field to be used is the extended CID field of one octet or the extended CID field of two octets.

### Related Art Document

### [Non-Patent Document]

Non-Patent Document 1: 3GPP TS 38.323 V15.6.0 (2019-06)
Non-Patent Document 2: 3GPP TS-RAN WG2 Meeting #109 electronic, R2-2000175, 24 Feb - 6 Mar 2020
Non-Patent Document 3: 3GPP TS-RAN WG2 Meeting #109 electronic, R2-2001298, 24 Feb - 6 Mar 2020

### SUMMARY OF THE INVENTION

### [PROBLEM TO BE SOLVED BY THE INVENTION]

Discussion of a context overwriting operation is currently ongoing at the 3GPP meeting. It is being considered to apply Robust Header Compression (RoHC) mechanism to the context overwriting operation. In the RoHC, the maximum number of CIDs that can be provided is max_CID. In the RoHC, in establishing a new context, in a case where max_CID number of CIDs have been provided and max_CID number of contexts have been established, one of the provided CIDs is selected, and the context corresponding to the selected CID is overwritten with a new context.

There is a need for a method of clarifying correspondence between a context and a feedback that is used in a process of establishing an overwritten new context.

### [MEANS FOR SOLVING THE PROBLEM]

According to an aspect of the present invention, there is provided a terminal including a control unit that determines, upon generation of a new context in a case where a number of established contexts is an integer M that is greater than or equal to zero, a number of context identifiers associated with the respective established M contexts is M, a number of contexts that have been transmitted and that are not established is N that is an integer greater than or equal to zero, and a number of context identifiers associated with the respective contexts that are not established is N, whether a total number of M and N, being M+N, is a maximum number of usable context identifiers; a transmitting unit that selects one established context from among the M established contexts upon determining, by the control unit, that the total number is the maximum number of the usable context identifiers, that associates a context identifier that has been associated with the selected established context with the new context by overwriting the selected established context with the new context, and that transmits the new context and the context identifier that is associated with the new context; and a receiving unit that receives a feedback corresponding to the transmission of the new context, wherein, upon detecting that the feedback is a positive acknowledgement, the control unit applies a compressed header corresponding to the new context to a data transmission subsequent to the reception of the feedback.

### [ADVANTAGE OF THE INVENTION]

According to an embodiment, a method of clarifying correspondence between a feedback and a content is provided.

### BRIEF DESCRIPTION OF DRAWINGS

FIG. 1 is a diagram illustrating an example of a configuration of a radio communication system according to an embodiment.
FIG. 2 is a diagram illustrating a Uu interface between a terminal and a 5G-AN.
FIG. 3 is a diagram illustrating an example of a procedure of compressing a header.
FIG. 4 is a diagram illustrating an example of overwriting a context corresponding to a provided CID with a new context in RoHC.
FIG. 5 is a diagram illustrating an example of a case in which there are multiple contexts to be established for the same CID.
FIG. 6 is a diagram illustrating an example of case 1.
FIG. 7 is a diagram illustrating an example of case 2.
FIG. 8 is a diagram illustrating an example of case 3.
FIG. 9 is a diagram illustrating an example of a process of proposed method 1.
FIG. 10 is a diagram illustrating an example of a frame configuration for a feedback usable in a case of transmitting CID, NACK, and PDCP SN.
FIG. 11 is a diagram illustrating an example of a frame configuration for a feedback usable in a case of transmitting CID, NACK, and PDCP SN.
FIG. 12 is a diagram illustrating an example a relationship between a header configuration and a frame configuration for a feedback usable in a case of transmitting CID, NACK, and PDCP SN.
FIG. 13 is a diagram illustrating an example of a design of an extended CID field.
FIG. 14 is a diagram illustrating an example of a design of an extended CID field.
FIG. 15 is a diagram illustrating an example of a design of an extended CID field.
FIG. 16 is a diagram illustrating an example of a design of an extended CID field.
FIG. 17 is a diagram illustrating an example of a functional configuration of the terminal.
FIG. 18 is a diagram illustrating an example of a functional configuration of the base station.
FIG. 19 is a diagram illustrating an example of the hardware configuration of the terminal and the base station.

### [EMBODIMENTS OF THE INVENTION]

In the following, embodiments of the present invention are described with reference to the drawings. The embodiments described below are merely examples, and the embodiments to which the present invention is applied are not limited to the following embodiments.

It is assumed that a radio communication system in the following embodiments basically conform to NR, but this is merely an example, and the radio communication system in the embodiments may partially or entirely conform to a radio communication system other than the NR (for example, LTE or LTE-A).

### (Overall System Configuration)

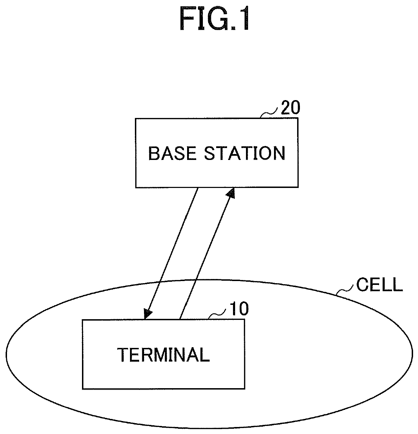

FIG. 1 is a diagram illustrating an example of a configuration of the radio communication system according to the embodiments. As illustrated in FIG. 1, the radio communication system according to the embodiments includes a terminal 10 and a base station 20 (which may be a base station simulator). In FIG. 1, one piece of the terminal 10 and one piece of the base station 20 are illustrated, but this is an example, and a plurality of the terminals 10 and a plurality of the base stations 20 may be provided. Note that, in a case where a base station simulator is used instead of the base station 20, instead of configuring a cell as illustrated in FIG. 1, a test environment may be formed by connecting the base station simulator and the terminal 10 by using a coaxial cable or the like after placing a fading simulator, an attenuator, and the like that intervene between the base station simulator and the terminal 10.

The terminal 10 is a communication device such as a smart phone, a portable telephone, a tablet, a wearable terminal, and a communication module for machine-to-machine (M2M) which has a radio communication function. The terminal 10 is wirelessly connected to the base station 20, and utilizes various types of communication services provided by the radio communication system. The base station 20 is a communication device that provides one or more cells, and wirelessly communicates with the terminal 10.

In the embodiments, a duplex method may be a time division duplex (TDD) method or a frequency division duplex (FDD) method.

In addition, in the embodiments, a radio parameter or the like is "configured" or "specified" may mean that a predetermined value is preconfigured in the base station 20 or the terminal 10, a predetermined value is assumed to be preconfigured in the base station 20 or the terminal 10, or a radio parameter transmitted from the base station 20 or the terminal 10 is configured.

The base station 20 is a communication device that provides one or more cells to perform wireless communication with the terminal 10. The physical resources of radio signals are defined in the time domain and the frequency domain. The time domain may be defined in the number of OFDM symbols (i.e., slots, subframes, symbols, time resources shorter than the symbols, or the like), and the frequency domain may be defined in the number of subcarriers or the number of resource blocks. The base station 20 transmits synchronization signals and system information to the terminal 10. The synchronization signals are NR-PSS and NR-SSS, for example. A part of the system information is transmitted on the NR-PBCH, for example, and is also called broadcast information. The synchronization signal and broadcast information may be transmitted periodically as the SS block (SS/PBCH block) formed of a predetermined number of OFDM symbols. The base station 20 transmits a control signal or data to the terminal 10 in the downlink (DL), and receives a control signal or data in the uplink (UL) from the terminal 10. Both the base station 20 and the terminal 10 are capable of using beam forming to transmit and receive signals. Reference signals transmitted from the base station 20 include a channel state information reference signal (CSI-RS), and channels transmitted from the base station 20 include a physical downlink control channel (PDCCH) and a physical downlink shared channel (PDSCH).

### (EHC)

In 3GPP Release 16, Ethernet (registered trademark) Header Compression (EHC) for Industrial Internet of Things (IIoT) has been specified.

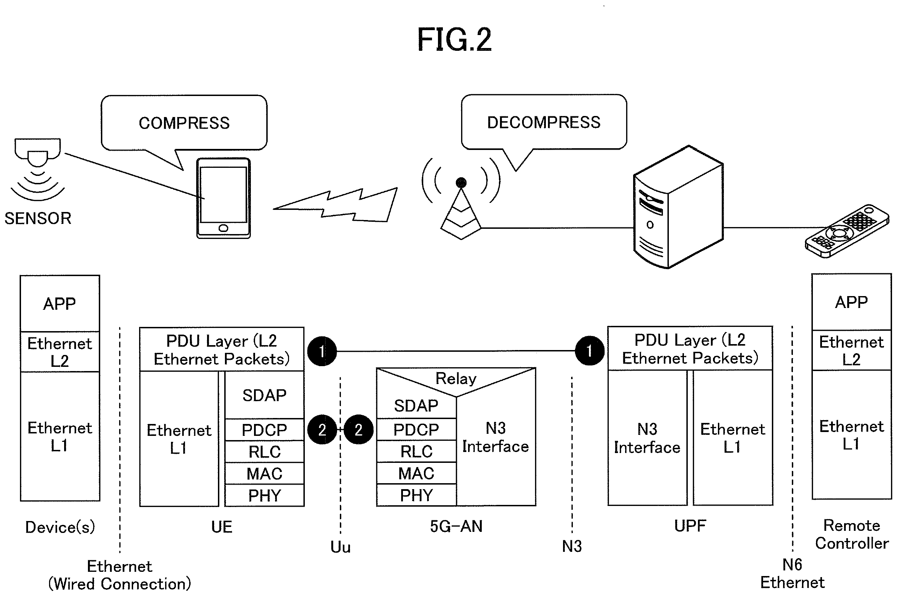

For example, as illustrated in the example of FIG. 2, when an Ethernet frame is transmitted and received between a terminal and a 5G-AN (Uu interface), the Ethernet header of the Ethernet frame is compressed.

For example, in a case of uplink communication, the Ethernet header compressed by a Packet Data Convergence Protocol (PDCP) entity of a terminal (UE) is decompressed by a PDCP entity of the 5G-AN, and the packet is transmitted to a remote controller by using the decompressed header information.

In the following description, the base station may include a compressor and a decompressor, and the terminal may include a compressor and a decompressor. In a case of downlink communication, the base station may operate as a compressor, and the terminal may operate as a decompressor. In a case of uplink communication, the base station may operate as a decompressor, and the terminal may operate as a compressor. In the following description, a context may be a content of an Ethernet header.

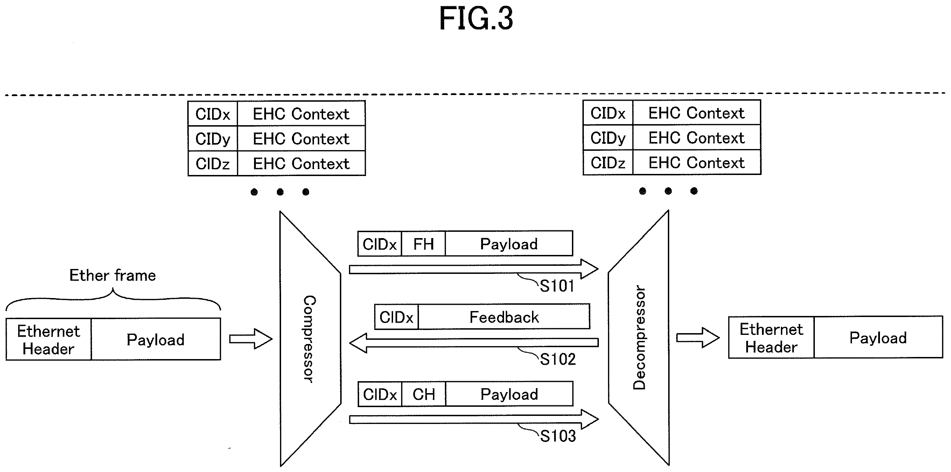

FIG. 3 is a diagram illustrating an example of a compression procedure of an Ethernet header. The compressor and the decompressor perform compression of the Ethernet header as follows. In step S101, the compressor transmits, to the decompressor, a full header (FH) of a packet and a context ID (CID) associated with the FH.

In step S102, the decompressor transmits a feedback corresponding to the context to the compressor.

The compressor having received the feedback in step S102 determines that the context has been established, and starts compression of the header. In other words, in step S103, the compressor transmits compressed header (CH) to the decompressor. However, the compressor transmits the FH and the CID associated with the FH to the decompressor per data transmission, until the compressor receives the feedback at step S102.

In the above description, "the context has been established" may mean that a state in which a content of the same Ethernet header is shared by the compressor-side and the decompressor-side is established.

As for the design of the above-described feedback at step S102, it is assumed that the CID is to be transmitted in the feedback so as to identify the context corresponding to the transmitted feedback. Additionally, the transmitting of, in addition to the CID, a Packet Data Convergence Protocol (PDCP) Protocol Data Unit (PDU), a Negative Acknowledgement (NACK) bit, or the like in the feedback has been studied.

The above-described Ethernet header Compression (EHC) is executed by the PDCP entity. The order of protocol headers higher than the PDCP may be as follows.

### PDCP header | SDAP header | EHC header| ROHC header | payload

The EHC function can be applied in units of Data Radio Bearers (DRBs) for transmitting user plane data. The EHC function can be applied to any of the uplink and the downlink. When the DRB is added, the base station may indicate, to the terminal by using RRC signaling, whether the Ethernet header is to be compressed.

### (Context overwriting operation)

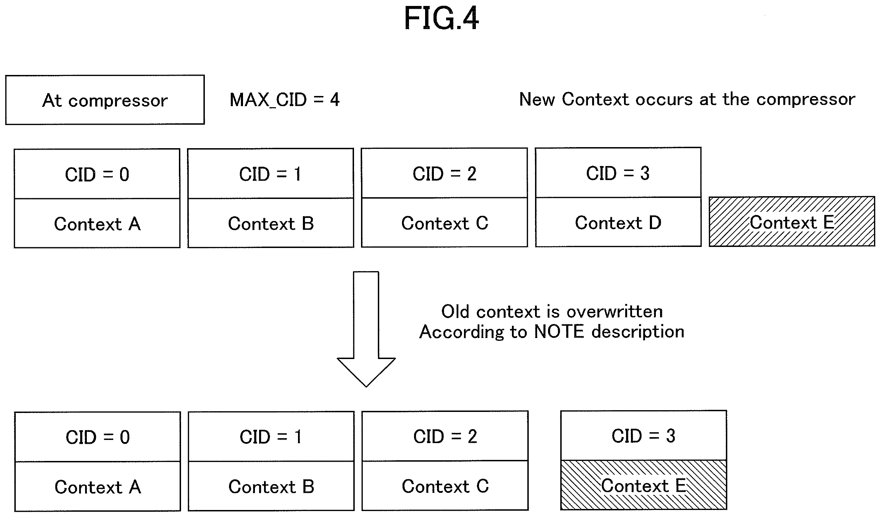

Discussion of a context overwriting operation is currently ongoing at the 3GPP meeting. It is being considered to apply Robust Header Compression (RoHC) mechanism to the context overwriting operation. In the RoHC, a TCP/IP header compression method is defined. FIG. 4 is a diagram illustrating an example of overwriting a context corresponding to a provided CID with a new context in the RoHC. In this case, in the RoHC, the maximum number of CIDs that can be provided is defined to be max_CID. In the RoHC, in establishing a new context, it is assumed that max_CID number of CIDs have been provided, and max_CID number of contexts have been established. In the RoHC, in this case, one of the provided CIDs is selected, and the context corresponding to the selected CID is overwritten with a new context.

In the example of FIG. 4, max_CID is 4. Context A is established for CID = 0, context B is established for CID = 1, context C is established for CID = 2, and context D is established for CID = 3. In this situation, as illustrated in the example of FIG. 4, when context E as a new context is to be established, a new CID cannot be assigned to context E because max_CID is 4 and CIDs = 0, 1, 2 and 3 have been used. Accordingly, in the example of the case of FIG. 4, CID = 3 is assigned to the context E by overwriting context D that has already been established with context E that is a new context.

The above-described operation corresponds to the standard specification that if MAX_CID ROHC contexts have already been established for a compressed flow and the new IP flow does not match any of the already established ROHC contexts, the compressor either associates the new IP flow with one of the ROHC CIDs associated with the existing compressed flow or transmits the PDCP SDU belonging to the IP flow as an uncompressed packet.

### (Problem)

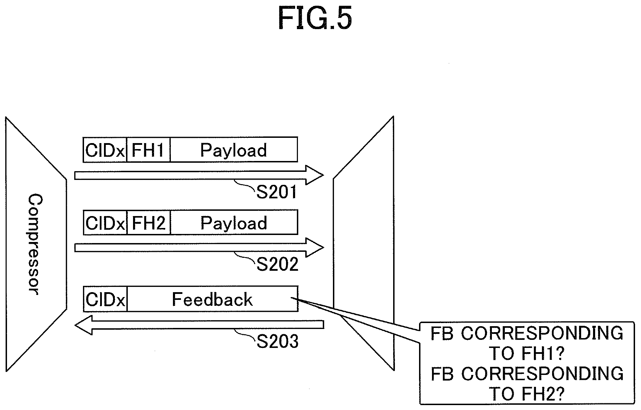

In the aforementioned RoHC, the method of overwriting a context corresponding to a CID that has already been provided with a new context includes the following problems to be solved. With reference to the example of FIG. 5, the problem to be solved is described.

As illustrated in the example of FIG. 5, in step S201, the compressor generates a context (FH1), assigns a CID to the context, and transmits, to the decompressor, the context (FH1) to which the CID is assigned together with a payload.

Subsequently, before receiving the feedback for the context (FH1) transmitted in step S201 of FIG. 5, in step S202, the compressor generates another context (FH2) that differs from the FH1, assigns the same CID as the CID assigned to the FH1, and transmits, to the decompressor, the another context (FH2) to which the CID is assigned, together with the payload.

After transmitting the FH2 in step S202 of FIG. 5, in step S203, the compressor receives the feedback transmitted with a delay with respect to the transmission of the FH1 in step S201. In this case, the compressor having received the feedback of step S203 may be unable to determine whether the received feedback is a feedback for the transmission of the FH1 in step S201 or a feedback for the transmission of the FH2 in step S202.

As one solution to the above-described problem, a method has been proposed in which a sequence number (SN) is assigned to a feedback to identify a correspondence between the feedback and a context. However, according to this method, the overhead of the feedback may increase due to the attached SN. There is a need for a method for solving the above-described problem without increasing the overhead of the feedback.

Accordingly, it has been studied whether the method of overwriting a context corresponding to a CID that has already been provided with a new context can be applied to the following three cases.

Case 1: The number of CIDs that have already been provided is less than max_CID.

Case 2: The number of CIDs that have already been provided is max_CID and all the contexts have been established.

Case 3: The number of CIDs that have already been provided is max_CID and all of the contexts have not yet been established.

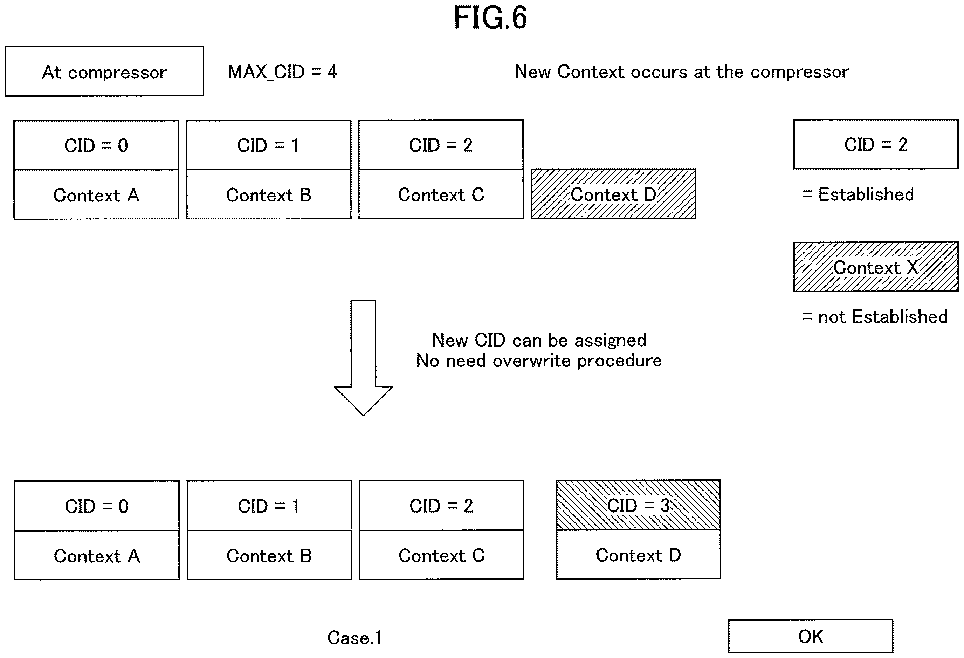

FIG. 6 is a diagram illustrating an example of the case 1. It is assumed that, at the compressor, the max_CID is 4. Furthermore, it is assumed that CID = 0 is assigned to context A, CID = 1 is assigned to context B, and CID = 2 is assigned to context C. In this situation, suppose that context D that is a new context to be established is generated at the compressor. In this case, since CID = 2 has not yet been used, the compressor assigns CID = 2 to context D. Accordingly, the process of overwriting the context is unnecessary.

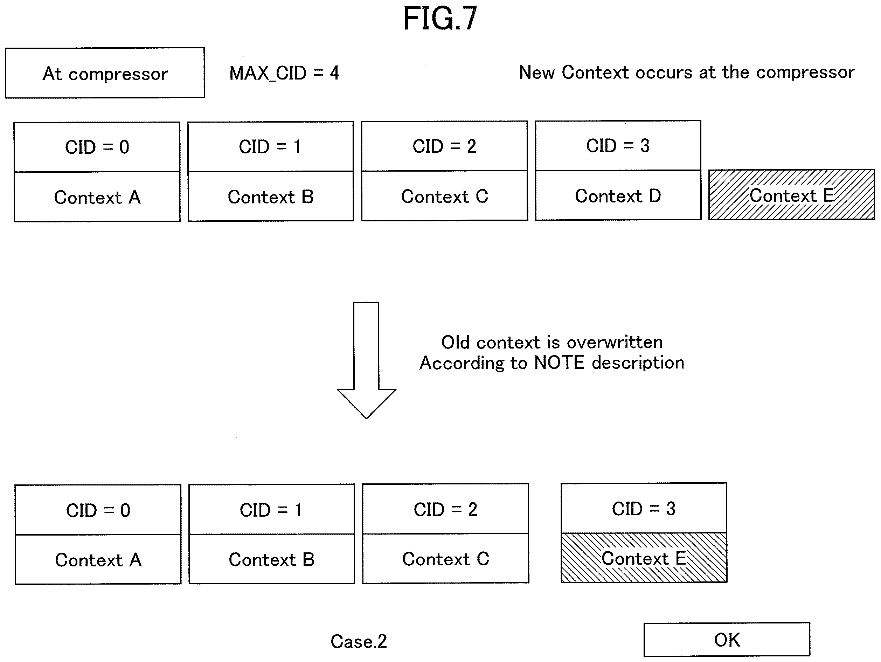

FIG. 7 is a diagram illustrating an example of the case 2. Suppose that, at the compressor, the max_CID is 4. Furthermore, suppose that CID = 0 is assigned to context A, CID = 1 is assigned to context B, CID = 2 is assigned to context C, and CID = 3 is assigned to context D. That is, assume that all the CIDs usable at the compressor have been used. In this situation, suppose that a new context E to be established is generated at the compressor. In this case, since all the CIDs usable at the compressor have been used, the compressor overwrites the context D that has been associated with CID = 3 with the new context E. In this case, the problem such as that illustrated in FIG. 5, where the correspondence between the feedback and a context is unclear, does not occur.

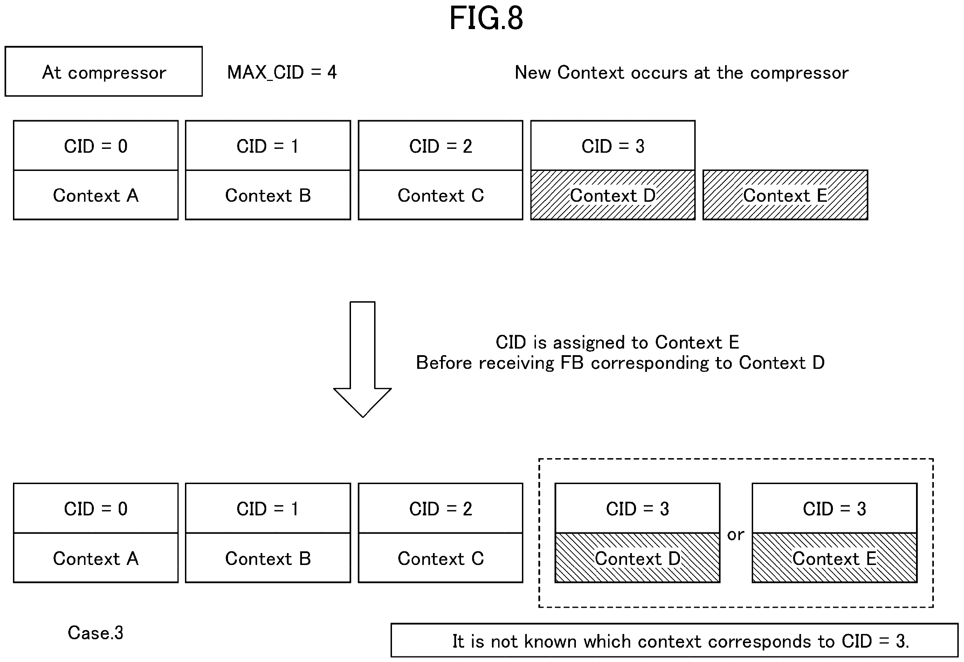

FIG. 8 is a diagram illustrating an example of the case 3. Suppose that, at the compressor, the max_CID is 4. Furthermore, suppose that CID = 0 is assigned to context A, CID = 1 is assigned to context B, and CID = 2 is assigned to context C. In this situation, suppose that context D that is a new context to be established is generated at the compressor. In this case, the compressor assigns CID = 3 to context D. Furthermore, suppose that a new context E to be established is generated at the compressor before the context D is established. In this case, since context D has not yet been established, the compressor assigns CID = 3 to context E. In this case, a problem may arise that the compressor cannot determine whether the feedback sent from the decompressor is a feedback to the context D or to the context E.

As described above, among the cases 1 to 3, the problem that the correspondence between the feedback and the context is unclear, such as that illustrated in FIG. 5, may occur in the case 3.

### (Proposed Method 1)

In order to solve the above-described problem of the case 3, it is proposed to modify the standard specification. For example, in the standard, it may be specified that, if a total of the number of already established EHC contexts and the number of EHC contexts that are not yet established for which the compressor has transmitted the Full Headers is the max_CID, and if a new Ethernet IP flow does not match any of the already established EHC contexts, the compressor associates the new IP flow with one of EHC CIDs associated with the already established compressed flows, or a PDCP SDU belonging to the IP flow is transmitted as an uncompressed packet.

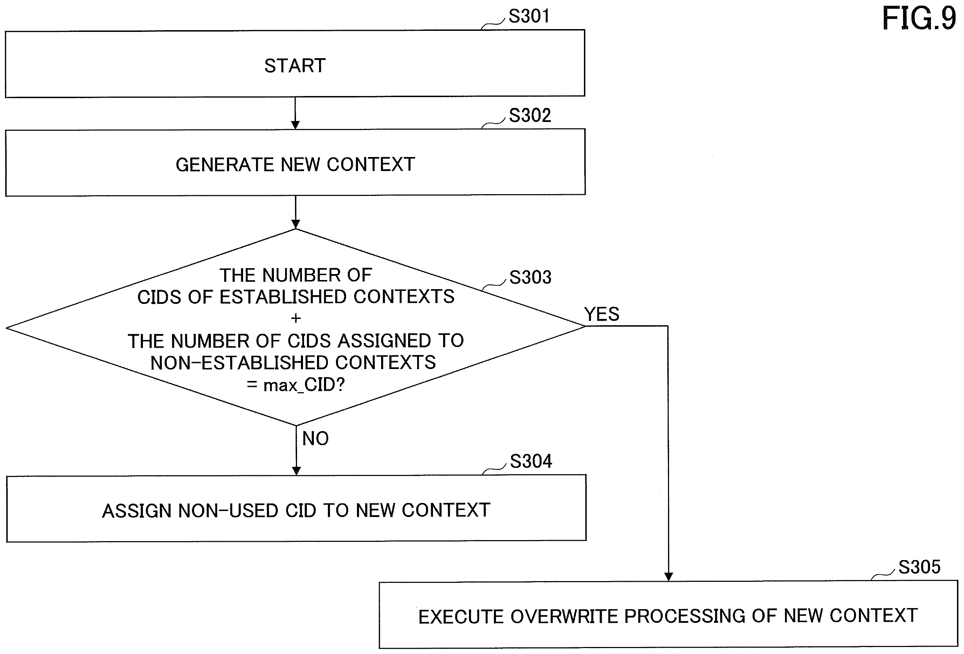

FIG. 9 is a diagram illustrating an example of processing of proposed method 1. In step S301, the compressor starts processing. In step S302, the compressor creates a new context.

In step S303, the compressor determines whether the combine total of the number of the CIDs associated with the already established contexts and the number of CIDs associated with the contexts that are not yet established for which the compressor transmits the Full Headers is less than the max_CID.

In step S303, if the compressor determines that the total number of the CIDs associated with the already established context and the CIDs associated with the context that are not yet established for which the compressor transmits the Full Headers is less than the max_CID (S303: NO), the process proceeds to step S304. In step S304, the compressor assigns an unused CID to the new context and executes a process for establishing the new context.

In step S303, if the compressor determines that the total number of the CIDs associated with the already established context and the CIDs associated with the context that are not yet established for which the compressor transmits the Full Headers is the max_CID (S303: YES), the process proceeds to step S305. In step S305, the compressor selects one of the already established contexts, and the compressor assigns the CID that has been assigned the selected already established context to a new context by overwriting the selected already established context with the new context. Namely, the CID that has been assigned to the selected already established context is assigned to the new context.

In step S305 of FIG. 9, the overwrite processing of the new context is performed, but the embodiments are not limited to this example. For example, instead of performing the process of overwriting with the new context at step S305, an Ethernet Full Header corresponding to the new context may be used for transmitting an Ethernet frame corresponding to the new context.

In the example of FIG. 9, in step S305, the compressor selects one of the already established contexts, and assigns the CID that has been assigned to the selected context to the new context by overwriting the selected context with the new context. In this case, for example, the compressor may determine a degree of similarity between the new context and each of the already established contexts, and the compressor may select the context having the highest degree of similarity, from among the established contexts. Furthermore, for example, the compressor may select the least frequently used context from among the already established contexts. Furthermore, for example, the compressor may select the context having the longest unused time at that time from among the already established contexts. Furthermore, for example, upon generation of the new context, the context in which the elapsed time from the time point at which the context is established is the longest may be selected from among the already established contexts. Furthermore, for example, upon generation of the new context, the context having the lowest frequency of use may be selected from among the already established contexts. Furthermore, for example, priority levels may be assigned to already established contexts by using RRC signaling, and the compressor may select one of the already established contexts based on the priority levels.

### (Effect of Proposed Method 1)

As described above, a method of assigning a sequence number (SN) for identifying the correspondence between the feedback and the context has been proposed. In this method, since the SN is assigned to the feedback, the overhead may be increased by the amount corresponding to the SN, for example, by 2 to 3 octets. In contrast, according to proposed method 1, since it is unnecessary to add an SN to the feedback, the overhead of the feedback can be reduced by 2 to 3 octets as compared with the method of assigning an SN to the feedback.

### (Modified example of proposed method 1)

In the above-described example, the proposed method is applied to solve the problem of the case 3, but the embodiments are not limited to this example. For example, suppose that the number of CIDs that have already been used at the compressor is less than the max_CID, as in the example of the case 1. In this case, the example of the case 1 corresponds to the case in which an unused CID is assigned to a new context for establishing the new context. In this regard, even if the number of CIDs that have been already used at the compressor is less than the max_CID, when a new context is to be established, by selecting, for the new context, one of the contexts that have already been established at the time point and by overwriting the selected already established context with the new context, the CID that has been assigned to the selected established context may be assigned to the new context.

The modified example of proposed method 1 may propose the following details, for example. 1: It is clarified that, when a new CID can be provided under the condition that the number of CIDs is less than the max_CID, and when a new context is to be established, the new CID is provided and the context is established by using the new CID. 2: When a new CID can be provided under the condition that the number of CIDs is less than the max_CID, and when a new context is to be established, a new context may be established by a method in which a new CID is provided and the context is established by using the CID or by a method in which the context is established by using a CID that has already been provided. Furthermore, if the compressor selects the method in which the context is established by using a CID that has already been provided, the compressor selects the CID (for which the feedback (FB) has been received) that has already been provided from among the CIDs that have already been provided.

The above-described proposal may be 1) described in normative text in the standard, 2) described as a note in the standard, or 3) described as up to implementation. According to the above-described proposal, the problem of context mismatch (i.e., the problem that the correspondence between the feedback and the context is unknown) can be solved. The overhead of the feedback can be reduced up to approximately 3 bytes compared to the proposal to assign an SN to the feedback.

### (Proposed Method 2)

In order to solve the problem of the above-described case 3, all of the CID, the NACK, and the PDCP SN may be signaled in the feedback.

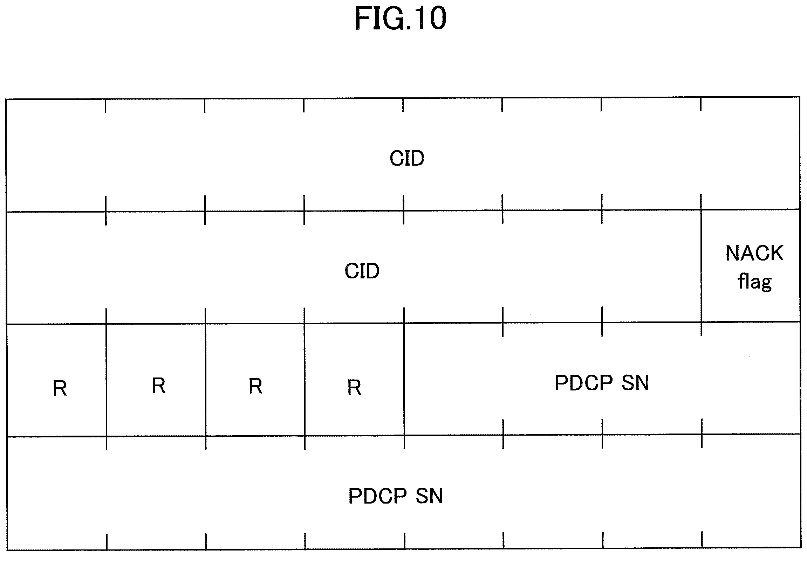

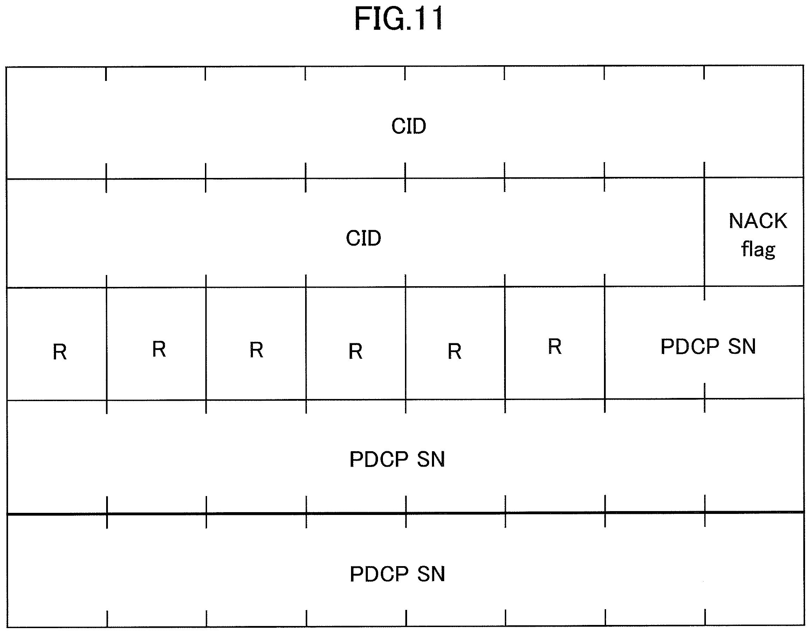

FIG. 10 is a diagram illustrating an example of a frame configuration for a feedback that can be used for transmitting CID, NACK, and PDCP SN. FIG. 11 is a diagram illustrating an example of a frame configuration for a feedback that can be used for transmitting CID, NACK, and PDCP SN.

### (Effect of proposed method 2)

According to the proposed method 2, the problem of the case 3 can be solved without changing the specification of the standard. In addition, once a context has been established in the de-compressor, by sending a NACK when the context is no longer usable in the de-compressor, the de-compressor can transmit, to the compressor, a notification that the context is no longer usable.

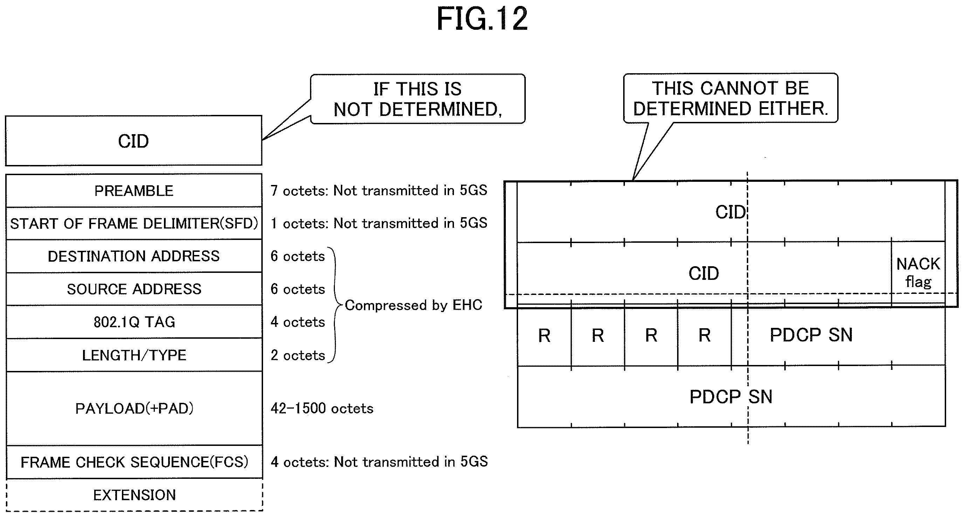

FIG. 12 is a diagram illustrating an example of the relationship between the header configuration and the frame configuration for a feedback that can be used for transmitting CID, NACK, and PDCP SN. Currently, the design of the CID format for the Ethernet frames to be sent by the compressor is not determined, and, thus, the design of the feedback CID format is not determined. For example, the F/C bit (the bit indicating whether it is a Full Header or a Compressed Header) portion of the CID transmitted in a transmission Ethernet frame may correspond to the NACK in the feedback frame configuration. In the frame configuration of the feedback, for example, one or more PDCP SNs may be added after the CID. In this case, the order of the octets in the frame configuration of the feedback need not be particularly limited. Furthermore, the order of the bits in the octet need not be particularly limited.

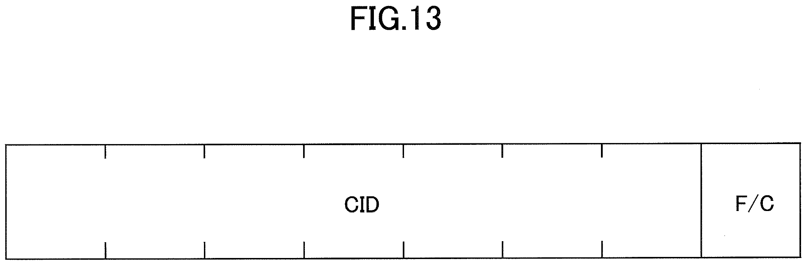

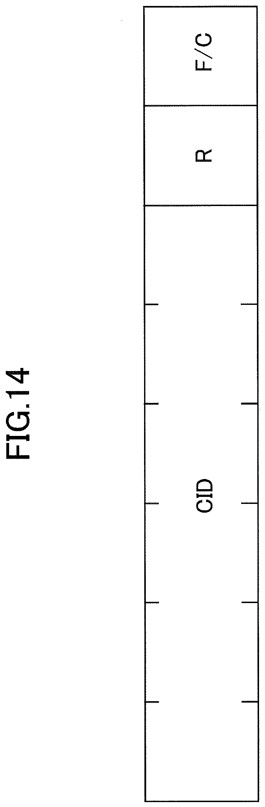

FIG. 13 is a diagram illustrating an example of a design of an extended CID field. In the case of FIG. 13, the size of the extended CID field is 1 octet. FIG. 14 illustrates another example of a design of an extended CID field. In the case of FIG. 14, the size of the extended CID field is 1 octet.

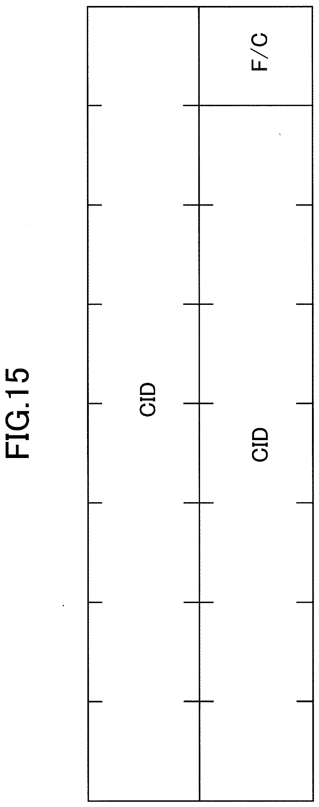

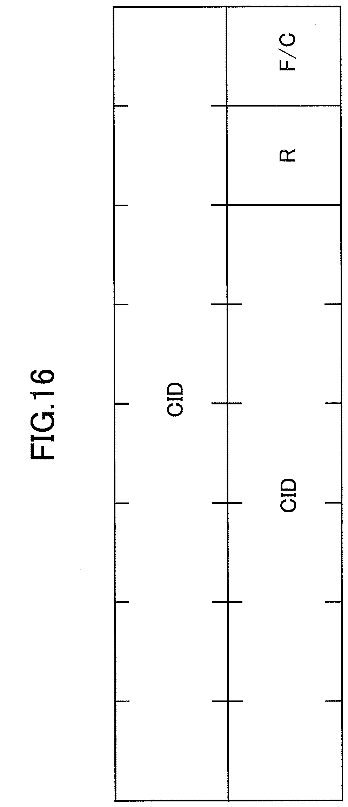

FIG. 15 is a diagram illustrating an example of a design of an extended CID field. In the case of FIG. 15, the size of the extended CID field is 2 octets. FIG. 16 illustrates another example of a design of an extended CID field. In the case of FIG. 16, the size of the extended CID field is 1 octet.

### (Device configuration)

In the following, examples of functional configuration of the terminal 10 and the base station 20 that execute the above-described processing operation are described. The terminal 10 and the base station 20 include all the functions described in the embodiments. However, it suffices for the terminal 10 and the base station 20 to include only a portion of the functions described in the embodiments.

### <Terminal>

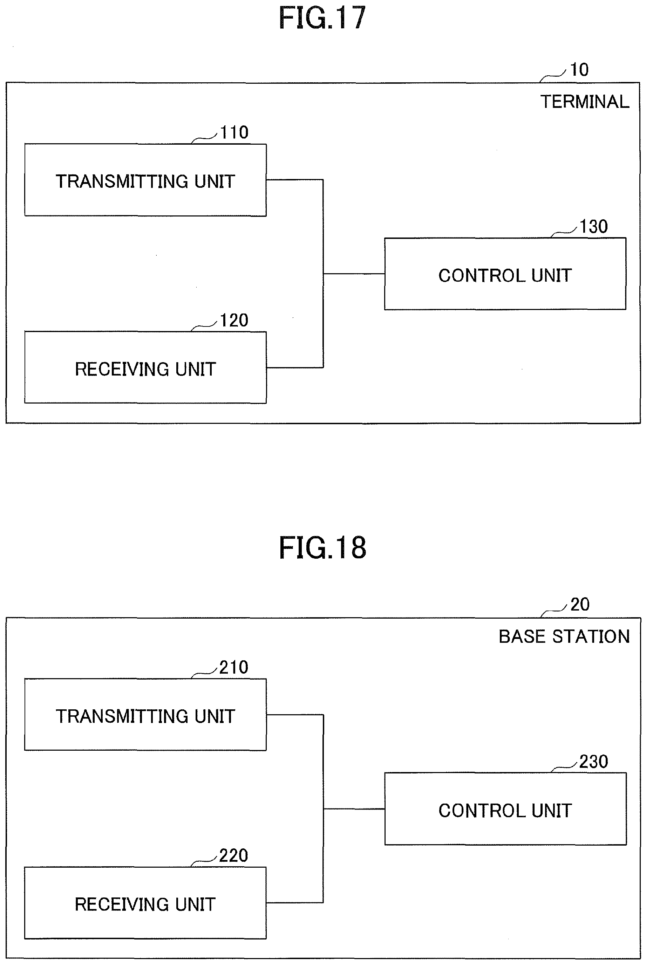

FIG. 17 is a diagram illustrating an example of the functional configuration of the terminal 10. As illustrated in FIG. 17, the terminal 10 includes a transmitting unit 110, a receiving unit 120, and a control unit 130. The functional configuration illustrated in FIG. 17 is only an example. The manner of function segmentation and the names of functional blocks do not matter as long as the operations of the embodiments can be performed.

The transmitting unit 110 generates transmission signals from transmission data, and transmits the transmission signals wirelessly. The receiving unit 120 receives various signals wirelessly, and acquires higher-layer signals from the received physical-layer signals. The receiving unit 120 includes a measuring unit that measures a received signal to acquire a reception power and the like.

The control unit 130 controls the terminal 10. The function of the control unit 130 relating to transmission may alternatively be included in the transmitting unit 110, and the function of the control unit 130 relating to reception may alternatively be included in the receiving unit 120.

For example, when a new context is generated, the control unit 130 of the terminal 10 determines whether the total number of the one or more context identifiers associated with one or more established contexts and one or more context identifiers of one or more transmitted contexts that have not yet been established is the maximum number of context identifiers that can be used. When the control unit 130 determines that the total number is the maximum number of the usable context identifiers, the transmitting unit 110 of the terminal 10 selects one of the one or more established contexts, associates the context identifier that has been associated with the selected context with a new context by overwriting the selected context with the new context, and transmits the new context and the context identifier associated with the new context. The receiving unit 120 of the terminal 10 receives feedback corresponding to the new context, and, when the feedback is a positive acknowledgement, the control unit 130 applies a compressed header corresponding to the new context for transmitting data.

### <Base station 20>

FIG. 18 is a diagram illustrating an example of the functional configuration of the base station 20. As illustrated in FIG. 18, the base station 20 includes a transmitting unit 210, a receiving unit 220, and a control unit 230. The functional configuration illustrated in FIG. 18 is only an example. The manner of function segmentation and the names of functional blocks do not matter as long as the operations according to the embodiments can be performed.

The transmitting unit 210 has the function to generate a signal to be transmitted to the terminal 10 and to transmit the signal wirelessly. The receiving unit 220 has the function to receive various signals transmitted from the terminal 10 and to acquire higher-layer information, for example, from the received signals. The receiving unit 220 includes a measuring unit that measures a received signal to acquire a reception power and the like.

The control unit 230 controls the base station 20. The function of the control unit 230 relating to transmission may alternatively be included in the transmitting unit 210, and the function of the control unit 230 relating to reception may alternatively be included in the receiving unit 220.

For example, when a new context is generated, the control unit 230 of the base station 20 determines whether the total number of one or more context identifiers associated with one or more established contexts and one or more context identifiers of one or more transmitted contexts that have not yet been established is the maximum number of context identifiers that can be used. When the control unit 230 determines that the total number is the maximum number of the usable context identifiers, the transmitting unit 210 of the base station 20 selects one of the one or more established contexts, associates the context identifier associated with the selected context with a new context by overwriting the selected context with the new context, and transmits the new context and the context identifier associated with the new context. The receiving unit 220 of the base station 20 receives the feedback corresponding to the new context, and, when the feedback is a positive acknowledgement, the control unit 230 applies a compressed header corresponding to the new context for transmitting data.

### <Hardware configuration>

The block diagrams (FIG. 17 to FIG. 18) used for the description of the above embodiments illustrate blocks of functional units. These functional blocks (components) are implemented by any combination of at least one of hardware or software. In addition, the implementation method of each functional block is not particularly limited. That is, each functional block may be implemented using a single device that is physically or logically combined, or may be implemented by directly or indirectly connecting two or more devices that are physically or logically separated (e.g., using wire or radio) and using these multiple devices. The functional block may be implemented by combining software with the above-described one device or the above-described plurality of devices. Functions include, but are not limited to, judgment, decision, determination, computation, calculation, processing, derivation, research, search, verification, reception, transmission, output, access, resolution, choice, selection, establishment, comparison, assumption, expectation, deeming, broadcasting, notifying, communicating, forwarding, configuring, reconfiguring, allocating, mapping, assigning, and the like. For example, a functional block (component) that functions to transmit is called a transmitting unit or a transmission unit. In either case, as described above, the implementation method is not particularly limited.

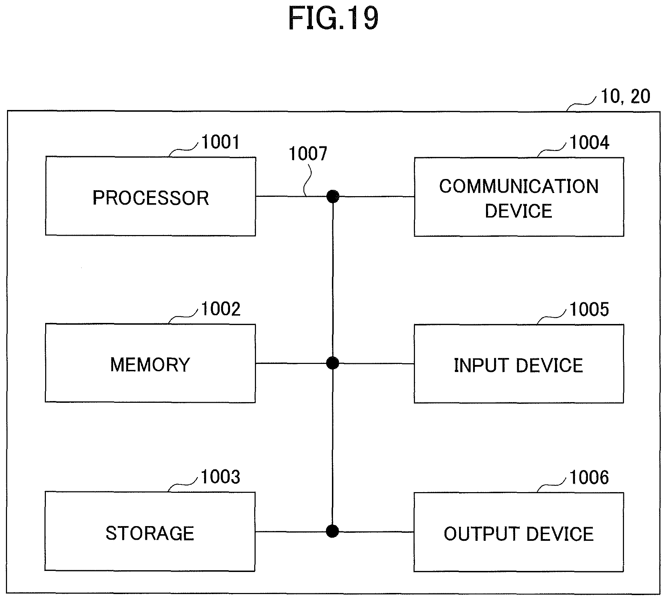

For example, the terminal 10 and the base station 20 according to the embodiments of the present invention may function as computers performing the process of the radio communication according to the embodiments of the present invention. FIG. 19 is a diagram illustrating an example of a hardware configuration of the terminal 10 and the base station 20 according to the embodiment. Each of the above-described terminal 10 and the base station 20 may be physically configured as a computer device including a processor 1001, a memory 1002, a storage 1003, a communication device 1004, an input device 1005, an output device 1006, a bus 1007, or the like.

Note that, in the following description, the term "device" can be replaced with a circuit, a device, a unit, or the like. The hardware configuration of the terminal 10 and the base station 20 may be configured to include one or more of the devices depicted in the figures, which are indicated by 1001 through 1006, or may be configured without some devices.

Each function of the terminal 10 and the base station 20 is implemented by loading predetermined software (program) on hardware, such as the processor 1001 and the memory 1002, so that the processor 1001 performs computation and controls communication by the communication device 1004, and at least one of reading and writing of data in the memory 1002 and the storage 1003.

The processor 1001, for example, operates an operating system to control the entire computer. The processor 1001 may be configured with a central processing unit (CPU: Central Processing Unit) including an interface with a peripheral device, a control device, a processing device, a register, or the like.

Additionally, the processor 1001 reads a program (program code), a software module, data, or the like from at least one of the storage 1003 and the communication device 1004 to the memory 1002, and executes various processes according to these. As the program, a program is used which causes a computer to execute at least a part of the operations described in the above-described embodiment. For example, the control unit 130 of the terminal 10 may be implemented by a control program that is stored in the memory 1002 and that is operated by the processor 1001. While the various processes described above are described as being executed in one processor 1001, they may be executed simultaneously or sequentially by two or more processors 1001. The processor 1001 may be implemented by one or more chips. The program may be transmitted from a network via a telecommunications line.

The memory 1002 is a computer readable storage medium, and, for example, the memory 1002 may be formed of at least one of a Read Only Memory (ROM), an Erasable Programmable ROM (EPROM), an Electrically Erasable Programmable ROM (EEPROM), and a Random Access Memory (RAM). The memory 1002 may be referred to as a register, a cache, a main memory (main storage device), or the like. The memory 1002 may store a program (program code), a software module, or the like, which can be executed for implementing the radio communication method according to the embodiments of the present disclosure.

The storage 1003 is a computer readable storage medium and may be formed of, for example, at least one of an optical disk, such as a Compact Disc ROM (CD-ROM), a hard disk drive, a flexible disk, an optical magnetic disk (e.g., a compact disk, a digital versatile disk, a Blu-ray (registered trademark) disk), a smart card, a flash memory (e.g., a card, a stick, a key drive), a floppy (registered trademark) disk, or a magnetic strip. The storage 1003 may be referred to as an auxiliary storage device. The above-described storage medium may be, for example, a database including at least one of the memory 1002 and the storage 1003, a server, or any other suitable medium.

The communication device 1004 is hardware (transmitting and receiving device) for performing communication between computers through at least one of a wired network and a wireless network, and is also referred to, for example, as a network device, a network control unit, a network card, a communication module, or the like. The communication device 1004 may be configured to include, for example, a high frequency switch, a duplexer, a filter, a frequency synthesizer, or the like to implement at least one of frequency division duplex (FDD: Frequency Division Duplex) and time division duplex (TDD: Time Division Duplex). For example, the above-described transmitting unit 110, receiving unit 120, and the like may be implemented by the communication device 1004. Furthermore, the transmitting unit 110 and the receiving unit 120 may be implemented to be physically or logically separated.

The input device 1005 is an input device (e.g., a keyboard, mouse, microphone, switch, button, or sensor) that receives an external input. The output device 1006 is an output device (e.g., a display, speaker, or LED lamp) that implements an external output. The input device 1005 and the output device 1006 may have an integrated configuration (for example, a touch panel).

Each device, such as the processor 1001 and the memory 1002, is also connected by the bus 1007 for communicating information. The bus 1007 may be formed of a single bus or may be formed of different buses between devices.

The terminal 10 and the base station 20 may each include hardware, such as a microprocessor, a digital signal processor (DSP: Digital Signal Processor), an Application Specific Integrated Circuit (ASIC), a Programmable Logic Device (PLD), and a Field Programmable Gate Array (FPGA), which may implement some or all of the functional blocks. For example, processor 1001 may be implemented using at least one of these hardware components.

### (Conclusion of the embodiments)

In this specification, at least the following terminal, base station, and communication method are disclosed.

A terminal including a control unit that determines, upon generation of a new context in a case where a number of established contexts is M that is an integer greater than or equal to zero, a number of context identifiers associated with the respective established M contexts is M, a number of contexts that have been transmitted and that are not established is N that is an integer greater than or equal to zero, and a number of context identifiers associated with the respective contexts that are not established is N, whether a total number of M and N, being M+N, is a maximum number of usable context identifiers; a transmitting unit that selects one established context from among the M established contexts upon determining, by the control unit, that the total number is the maximum number of the usable context identifiers, that associates a context identifier that has been associated with the selected established context with the new context by overwriting the selected established context with the new context, and that transmits the new context and the context identifier that is associated with the new context; and a receiving unit that receives a feedback corresponding to the transmission of the new context, wherein, upon detecting that the feedback is a positive acknowledgement, the control unit applies a compressed header corresponding to the new context to a data transmission subsequent to the reception of the feedback. Note that the above-described contexts that have been transmitted and that are not established may be contexts for which the terminal has not yet received a feedback from the base station.

In the method of assigning a sequence number (SN) to identify the correspondence between the feedback and the context, since an SN is assigned to the feedback, the overhead may be increased by, for example, 2 to 3 octets corresponding to the amount of the SN. In contrast, according to the above-described configuration, since it is unnecessary to add an SN to the feedback, the overhead of the feedback can be reduced by 2 to 3 octets as compared with the method of adding an SN to the feedback.

Upon the generation of the new context, the transmitting unit may select a least frequently used established context, from among the one or more established contexts.

According to the above-described configuration, since a context which is used infrequently, that is, a context which is not used frequently is deleted (overwritten), the likelihood of re-establishing the deleted context can be reduced.

The feedback may include information indicating the context identifier associated with the new context, acknowledgement information, and information indicating a sequence number to identify the context.

According to the above-described configuration, it is possible to more accurately detect which context the feedback corresponds to.

A base station including a control unit that determines, upon generation of a new context in a case where a number of established contexts is M that is an integer greater than or equal to zero, a number of context identifiers associated with the respective established M contexts is M, a number of contexts that have been transmitted and that are not established is N that is an integer greater than or equal to zero, and a number of context identifiers associated with the respective contexts that are not established is N, whether a total number of M and N, being M+N, is a maximum number of usable context identifiers; a transmitting unit that selects one established context from among the M established contexts upon determining, by the control unit, that the total number is the maximum number of the usable context identifiers, that associates a context identifier that has been associated with the selected established context with the new context by overwriting the selected established context with the new context, and that transmits the new context and the context identifier that is associated with the new context; and a receiving unit that receives a feedback corresponding to the transmission of the new context, wherein, upon detecting that the feedback is a positive acknowledgement, the control unit applies a compressed header corresponding to the new context to a data transmission subsequent to the reception of the feedback.

According to the above-described configuration, since it is unnecessary to add an SN to the feedback, the overhead of the feedback can be reduced by 2 to 3 octets as compared with the method of adding an SN to the feedback.

A communication method executed by a terminal, the method including determining, upon generation of a new context in a case where a number of established contexts is M that is an integer greater than or equal to zero, a number of context identifiers associated with the respective established M contexts is M, a number of contexts that have been transmitted and that are not established is N that is an integer greater than or equal to zero, and a number of context identifiers associated with the respective contexts that are not established is N, whether a total number of M and N, being M+N, is a maximum number of usable context identifiers; selecting one established context from among the M established contexts upon determining that the total number is the maximum number of the usable context identifiers, associating a context identifier that has been associated with the selected established context with the new context by overwriting the selected established context with the new context, and transmitting the new context and the context identifier that is associated with the new context; receiving a feedback corresponding to the transmission of the new context; and upon detecting that the feedback is a positive acknowledgement, applying a compressed header corresponding to the new context to a data transmission subsequent to the reception of the feedback.

According to the above-described configuration, since it is unnecessary to add an SN to the feedback, the overhead of the feedback can be reduced by 2 to 3 octets as compared with the method of adding an SN to the feedback.

### (Supplemental Embodiments)

While the embodiments of the present invention are described above, the disclosed invention is not limited to the embodiments, and those skilled in the art will appreciate various alterations, modifications, alternatives, substitutions, or the like. Descriptions are provided using specific numerical examples to facilitate understanding of the invention, but, unless as otherwise specified, these values are merely examples and any suitable value may be used. Classification of the items in the above descriptions is not essential to the present invention, and the items described in two or more items may be used in combination as needed, or the items described in one item may be applied (as long as there is no contradiction) to the items described in another item. The boundaries of functional units or processing units in the functional block diagram do not necessarily correspond to the boundaries of physical components. An operation by a plurality of functional units may be physically performed by one component or an operation by one functional unit may be physically executed by a plurality of components. For the processing procedures described in the embodiments, the order of processing may be changed as long as there is no contradiction. For the convenience of the description of the process, the terminal 10 and the base station 20 are described using functional block diagrams, but such devices may be implemented in hardware, software, or a combination thereof. Software operated by a processor included in the terminal 10 in accordance with the embodiments of the present invention and software operated by a processor included in the base station 20 in accordance with the embodiments of the present invention may be stored in a random access memory (RAM), a flash memory, a read-only memory (ROM), an EPROM, an EEPROM, a register, a hard disk (HDD), a removable disk, a CD-ROM, a database, a server, or any other suitable storage medium.

Notification of information is not limited to the aspects/embodiments described in the disclosure, and notification of information may be made by another method. For example, notification of information may be implemented by physical layer signaling (e.g., Downlink Control Information (DCI), Uplink Control Information (UCI), higher layer signaling (e.g., Radio Resource Control (RRC) signaling, Medium Access Control (MAC) signaling, broadcast information (Master Information Block (MIB), System Information Block (SIB))), or other signals or combinations thereof. RRC signaling may be referred to as an RRC message, for example, which may be an RRC connection setup message, an RRC connection reconfiguration message, or the like.

The aspects/embodiments described in this disclosure may be applied to a system using at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), any other appropriate system, and a next generation system extended based on theses. Additionally, a plurality of systems may be combined (e.g., a combination of at least one of LTE and LTE-A and 5G) to be applied.

The processing procedures, sequences, flow charts, and the like of each aspect/embodiment described in this disclosure may be reordered, provided that there is no contradiction. For example, the methods described in this disclosure present elements of various steps in an exemplary order and are not limited to the particular order presented.

The particular operation described in this disclosure to be performed by the base station 20 may be performed by an upper node in some cases. It is apparent that in a network consisting of one or more network nodes having the base station 20, various operations performed for communicating with the terminal may be performed by at least one of the base station 20 and a network node other than the base station 20 (e.g., MME or S-GW can be considered, however, the network node is not limited to these). The case is exemplified above in which there is one network node other than the base station 20. However, the network node other than the base station 20 may be a combination of multiple other network nodes (e.g., MME and S-GW).

Input and output information may be stored in a specific location (e.g., memory) or managed using management tables. Input and output information may be overwritten, updated, or added. Output information may be deleted. The input information may be transmitted to another device.

The determination may be made by a value (0 or 1) represented by 1 bit, by a true or false value (Boolean: true or false), or by comparison of numerical values (e.g., a comparison with a predefined value).

The aspects/embodiments described in this disclosure may be used alone, in combination, or switched with implementation. Notification of predetermined information (e.g. "X" notice) is not limited to a method that is explicitly performed, and may also be made implicitly (e.g. "no notice of the predetermined information").

Software should be broadly interpreted to mean, regardless of whether referred to as software, firmware, middleware, microcode, hardware description language, or any other name, instructions, sets of instructions, code, code segments, program code, programs, subprograms, software modules, applications, software applications, software packages, routines, subroutines, objects, executable files, executable threads, procedures, functions, or the like.

Software, instructions, information, or the like may also be transmitted and received via a transmission medium. For example, when software is transmitted from a website, server, or other remote source using at least one of wireline technology (such as coaxial cable, fiber optic cable, twisted pair, digital subscriber line) and wireless technology (e.g., infrared or microwave), at least one of these wireline technology and wireless technology is included within the definition of a transmission medium.

The information, signals, or the like described in this disclosure may be represented using any of a variety of different techniques. For example, data, instructions, commands, information, signals, bits, symbols, chips, or the like which may be referred to throughout the above description may be represented by voltages, currents, electromagnetic waves, magnetic fields or magnetic particles, optical fields or photons, or any combination thereof.

The terms described in this disclosure and those necessary for understanding this disclosure may be replaced by terms having the same or similar meanings. For example, at least one of the channels and the symbols may be a signal (signaling). The signal may also be a message. Furthermore, a component carrier (CC: Component Carrier) may be referred to as a carrier frequency, a cell, a frequency carrier, or the like.

As used in this disclosure, the terms "system" and "network" are used interchangeably. The information, parameters, or the like described in the present disclosure may also be expressed using absolute values, relative values from predetermined values, or they may be expressed using corresponding separate information. For example, radio resources may be those indicated by an index.

The names used for the parameters described above are not restrictive in any respect. In addition, the mathematical equations using these parameters may differ from those explicitly disclosed in this disclosure. Since the various channels (e.g., PUCCH or PDCCH) and information elements can be identified by any suitable name, the various names assigned to these various channels and information elements are not in any way limiting.

In this disclosure, the terms "Base Station," "Radio Base Station," "Fixed Station," "NodeB," "eNodeB(eNB) ," "gNodeB (gNB) , " "Access Point," "Transmission Point," "Reception Point," "Transmission/Reception Point," "Cell," "Sector," "Cell Group," "Carrier," "Component Carrier," and the like may be used interchangeably. The base stations may be referred to in terms such as macrocell, small-cell, femto-cell, or pico-cell.

The base station can accommodate one or more (e.g., three) cells. Where the base station accommodates a plurality of cells, the entire coverage area of the base station can be divided into a plurality of smaller areas, each smaller area can also provide communication services by means of a base station subsystem (e.g., an indoor small base station (RRH) or a remote Radio Head). The term "cell" or "sector" refers to a portion or all of the coverage area of at least one of the base station and base station subsystem that provides communication services at the coverage.

In this disclosure, terms such as "mobile station (MS: Mobile Station)", "user terminal", "user equipment (UE: User Equipment)", "terminal", or the like may be used interchangeably.

The mobile station may be referred to by one of ordinary skill in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term.

At least one of a base station and a mobile station may be referred to as a transmission unit, receiver, communication device, or the like. At least one of a base station and a mobile station may be a device installed in a mobile body, a mobile body itself, or the like. The mobile body may be a vehicle (e.g., a car or an airplane), an unmanned mobile (e.g., a drone or an automated vehicle), or a robot (manned or unmanned). At least one of a base station and a mobile station includes a device that does not necessarily move during communication operations. For example, at least one of a base station and a mobile station may be an Internet of Things (IoT) device such as a sensor.

In addition, the base station in the present disclosure may be replaced with the user terminal. For example, various aspects/embodiments of the present disclosure may be applied to a configuration in which communication between the base station and the user terminal is replaced with communication between multiple user terminals (e.g., may be referred to as Device-to-Device (D2D) or Vehicle-to-Everything (V2X)). In this case, a configuration may be such that the above-described function of the base station 20 is included in the terminal 10. The terms "up" and "down" may also be replaced with the terms corresponding to terminalto-terminal communication (e.g., "side"). For example, an uplink channel, a downlink channel, or the like may be replaced with a sidelink channel. Similarly, the user terminal according to the present disclosure may be replaced with a base station. In this case, a configuration may be such that, the function included in the above-described terminal 10 may be included in the base station 20.

The term "connected" or "coupled" or any variation thereof means any direct or indirect connection or connection between two or more elements and may include the presence of one or more intermediate elements between two elements "connected" or "coupled" with each other. The coupling or connection between the elements may be physical, logical, or a combination of these. For example, "connection" may be replaced with "access". As used in the present disclosure, the two elements may be considered as being "connected" or "coupled" to each other using at least one of the one or more wires, cables, and printed electrical connections and, as a number of non-limiting and non-inclusive examples, electromagnetic energy having wavelengths in the radio frequency region, the microwave region, and the light (both visible and invisible) region.

The reference signal may be abbreviated as RS (Reference Signal) or may be referred to as a pilot, depending on the standard applied.

As used in this disclosure, the expression "based on" does not mean "based on only" unless otherwise specified. In other words, the expression "based on" means both "based on only" and "at least based on."

As long as "include," "including," and variations thereof are used in this disclosure, the terms are intended to be inclusive in a manner similar to the term "comprising." Furthermore, the term "or" used in the disclosure is intended not to be an exclusive OR.

In the present disclosure, for example, if an article is added by translation, such as "a," "an," and "the" in English, the present disclosure may include that the noun following the article is plural.

In the present disclosure, the term "A and B are different" may imply that "A and B are different from each other." Note that the term may also imply "each of A and B is different from C." The terms, such as "separated" or "coupled," may also be interpreted similarly.

While the present invention is described in detail above, those skilled in the art will appreciate that the present invention is not limited to the embodiments described in this specification. The present invention may be implemented as modifications and variations without departing from the gist and scope of the present invention as defined by the claims. Accordingly, the description of this specification is for illustrative purposes only and is not intended to have any restrictive meaning with respect to the present invention.

### LIST OF REFERENCE SYMBOLS

- 10: terminal
- 110: transmitting unit
- 120: receiving unit
- 130: control unit
- 20: base station
- 210: transmitting unit
- 220: receiving unit
- 230: control unit
- 1001: processor
- 1002: memory
- 1003: storage
- 1004: communication device
- 1005: input device
- 1006: output device

## Claims

1. A terminal comprising:
a control unit that determines, upon generation of a new context in a case where
a number of established contexts is M that is an integer greater than or equal to zero,
a number of context identifiers associated with the respective established M contexts is M,
a number of contexts that have been transmitted and that are not established is N that is an integer greater than or equal to zero, and
a number of context identifiers associated with the respective contexts that are not established is N,
whether a total number of M and N, being M+N, is a maximum number of usable context identifiers;
a transmitting unit that selects one established context from among the M established contexts upon determining, by the control unit, that the total number is the maximum number of the usable context identifiers, that associates a context identifier that has been associated with the selected established context with the new context by overwriting the selected established context with the new context, and that transmits the new context and the context identifier that is associated with the new context; and
a receiving unit that receives a feedback corresponding to the transmission of the new context,
wherein, upon detecting that the feedback is a positive acknowledgement, the control unit applies a compressed header corresponding to the new context to a data transmission subsequent to the reception of the feedback.

2. The terminal according to claim 1, wherein, upon the generation of the new context, the transmitting unit selects a least frequently used established context, from among the one or more established contexts.

3. The terminal according to claim 1, wherein the feedback includes information indicating the context identifier associated with the new context, acknowledgement information, and information indicating a sequence number to identify the context.

4. A base station comprising:
a control unit that determines, upon generation of a new context in a case where
a number of established contexts is M that is an integer greater than or equal to zero,
a number of context identifiers associated with the respective established M contexts is M,
a number of contexts that have been transmitted and that are not established is N that is an integer greater than or equal to zero, and
a number of context identifiers associated with the respective contexts that are not established is N,
whether a total number of M and N, being M+N, is a maximum number of usable context identifiers;
a transmitting unit that selects one established context from among the M established contexts upon determining, by the control unit, that the total number is the maximum number of the usable context identifiers, that associates a context identifier that has been associated with the selected established context with the new context by overwriting the selected established context with the new context, and that transmits the new context and the context identifier that is associated with the new context; and
a receiving unit that receives a feedback corresponding to the transmission of the new context,
wherein, upon detecting that the feedback is a positive acknowledgement, the control unit applies a compressed header corresponding to the new context to a data transmission subsequent to the reception of the feedback.

5. A communication method executed by a terminal, the method comprising:
determining, upon generation of a new context in a case where
a number of established contexts is M that is an integer greater than or equal to zero,
a number of context identifiers associated with the respective established M contexts is M,
a number of contexts that have been transmitted and that are not established is N that is an integer greater than or equal to zero, and
a number of context identifiers associated with the respective contexts that are not established is N,
whether a total number of M and N, being M+N, is a maximum number of usable context identifiers;
selecting one established context from among the M established contexts upon determining that the total number is the maximum number of the usable context identifiers, associating a context identifier that has been associated with the selected established context with the new context by overwriting the selected established context with the new context, and transmitting the new context and the context identifier that is associated with the new context;
receiving a feedback corresponding to the transmission of the new context; and
upon detecting that the feedback is a positive acknowledgement, applying a compressed header corresponding to the new context to a data transmission subsequent to the reception of the feedback.
